# EUROPÄISCHE PATENTSCHRIFT

(11) **EP 1 192 364 B1**
(45) Veröffentlichungstag und Bekanntmachung des Hinweises auf die Patenterteilung: **05.01.2005**
(21) Anmeldenummer: 00931157.2
(22) Anmeldetag: 10.05.2000
(51) Int. Cl.: F16D 23/06

(54) **SCHIEBEMUFFE EINER SYNCHRONISIEREINHEIT FÜR SCHALTGETRIEBE**
SLIP JOINT OF A SYNCHRONIZATION UNIT FOR TRANSMISSIONS
MANCHON COULISSANT D'UNE UNITE DE SYNCHRONISATION POUR BOITES DE VITESSES

(30) Priorität: 10.07.1999 DE 19932300
(43) Veröffentlichungstag der Anmeldung: 03.04.2002
(73) Patentinhaber: INA-Schaeffler KG, 91074 Herzogenaurach (DE)
(72) Erfinder: SCHWUGER, Josef, D-91315 Höchstadt (DE); SINNER, Rudolf, D-91088 Bubenreuth (DE)
(86) Internationale Anmeldenummer: PCT/EP2000/004163
(87) Internationale Veröffentlichungsnummer: WO 2001/004505

(56) Entgegenhaltungen:
- EP-A- 0 955 481
- DE-A- 4 418 632
- DE-C- 19 580 558
- US-A- 5 701 574

## Beschreibung

### Gebiet der Erfindung

Die Erfindung betrifft eine Schiebemuffe einer Synchronisiereinheit, mit an dem Innenumfang der Schiebemuffe ausgebildeten sowie nach innen gerichteten Zähnen, wobei die Flanken der Zähne längs zur Mittelachse der Schiebemuffe ausgerichtet verlaufen und die nach innen gerichteten Zähne in eine Außenverzahnung eines die Schiebemuffe längsverschiebbar aufnehmenden Synchronkörpers greifen und wobei wenigstens einer der nach innen gerichteten Zähne mit mindestens einer zumindest in das freie nach innen weisende Ende des Zahnes eingebrachten sowie sich in Richtung des Fußes des Zahnes erstreckenden Ausnehmung versehen ist.

### Hintergrund der Erfindung

Derartige Schiebemuffen sind in der Regel als Kupplungselemente in Synchronisiereinrichtungen von modernen handgeschalteten Kraftfahrzeuggetrieben eingesetzt. Sie verbinden eine Getriebewelle verdrehfest mit einem auf der Getriebewelle drehbar gelagerten Gangrad. Dabei sitzt die Schiebemuffe konzentrisch zur Getriebewelle angeordnet, verdrehfest und in Längsrichtung der Getriebewelle verschiebbar sowie mit einem Gangrad kuppelbar auf einem Synchronkörper.

Schiebemuffen gibt es in den verschiedensten Ausführungen. Zumeist weisen sie an ihrer Innenmantelfläche eine nach innen weisende Verzahnung auf, die in eine Gegenverzahnung des Synchronkörpers und im geschalteten Zustand in eine Verzahnung des Gangrades eingreift. Am Außenumfang der Schiebemuffe ist eine Führung für eine Schaltgabel vorgesehen. Mit der Schaltgabel wird die Schiebemuffe in Längsrichtung auf dem Synchronkörper verschoben, bis sie mit dem Zahnrad verbunden oder wieder zurück in ihre Neutralstellung bewegt ist.

In der Neutralstellung werden die Schiebemuffen oft axial durch ein Rastelement gehalten, das im Synchronkörper aufgenommen ist und zumeist federbelastet auf eine Ausnehmung wirkt. Die Ausnehmung ist, je nach Ausführung der Rastierung, an einzelnen oder alten nach innen gerichteten Zähnen der Schiebemuffe ausgebildet. Das Rastelement bewirkt, daß die Schiebemuffe erst nach dem Überwinden eines definierten Widerstandes durch die Bedienperson, beim Schalten des Ganges, axial bewegt werden kann und sich nicht unbeabsichtigt und selbsttätig in axiale Richtung verschiebt. Um verschiedene Rastpunkte, z. B. für eine Neutral- und eine Raststellung, festzulegen oder Verschiebekräfte und Kraftverläufe unterschiedlicher Höhe zu definieren, sind häufig zwei oder mehr Ausnehmungen in Längsrichtung des Zahnes hintereinander angeordnet.

Neben oder unabhängig von den vorgenannten Rastelementen wirken bei anderen Synchronisiereinrichtungen auf die Ausnehmungen des nach innen gerichteten Zahnes Druckstücke oder Sperrelemente. Die Druckstücke dienen als Betätigungselement für den Prozeß der Vorsynchronisierung. Bei axialem Verschieben der Schiebemuffe werden die Druckstücke axial durch diese mitgenommen. Dabei leiten sie den Prozeß der Synchronisation ein, indem sie auf zwischen dem Gangrad und denn Synchronkörper angeordnete Synchronringe wirken.

In DE 195 80 558 C1 ist z. B. eine Synchronisiereinheit beschrieben, bei der am Umfang des Synchronkörpers verteilt Druckstücke aufgenommen sind, die jeweils mit einem Arretierelement kombiniert sind und jeweils auf eine entsprechende Ausnehmung in einem Zahn wirken.

Sperrelemente werden z. B. eingesetzt, um ein vorzeitiges Schalten eines Ganges bei zu hohen Differenzdrehzahlen zu verhindern. Das Sperrelement wird in einem solchen Fall beispielsweise durch die Fliehkraft in der Ausnehmung verriegelt und verhindert ein axiales Verschieben der Schiebemuffe.

Die Verzahnungen der Schiebemuffe oder des Sychronkörpers greifen zueinander längsverschiebbar ineinander. In der Praxis werden die verschiedensten Ausführungsformen von Verzahnungen angewendet. Dabei gibt es sowohl unterschiedliche Ausbildungsfonrmen von Zähnen, als auch sich unterscheidende Anordnungen der Zähne zueinander. Die Verzahnung ist z. B., wie in DE 195 80 558 C1 dargestellt, so ausgeführt, daß die Schiebemuffe einen in Umfangsrichtung umlaufend mit gleichmäßig zueinander beabstandeten (gleiche Teilung) nach innen gerichteten Zähnen versehenen Zahnkranz aufweist. Bei der dazugehörigen Gegenverzahnung des Synchronkörpers weist der Zahnkranz zwar auch die gleiche Teilung auf, jedoch sind an seinem Umfang verteilt, anstelle von nach außen gerichteten Zähnen, mehrere die normale Breite einer Zahnlücke überschreitende Lücken gleicher Breite für die Aufnahme des Druckstückes vorgesehen.

Die vorgenannten Ausnehmungen in der Schiebemuffe, auf die zuvor erwähnte Druckstücke, Rastelemente usw. wirken, sind in der Regel als eine umlaufende Nut, mittels eines spanabhebenden Verfahrens eingebracht. Dadurch sind alle Zähne des betroffenen Zahnkranzes mit einer derartigen Ausnehmung versehen. Seltener werden die Ausnehmungen durch ein spanendes Verfahren nur an einzelnen tatsächlich mit den obengenannten Elementen beaufschlagten Zähnen eingebracht. Das geschieht insbesondere dann, wenn am Umfang verteilt mehrere Zähne mit unterschiedlich ausgebildeten Ausnehmungen vorzusehen sind oder, wenn zu erwarten ist, daß eine umlaufende Nut die Tragfähigkeit der Zähne unzulässig schwächt. Die Kosten für das Einbringen der Ausnehmungen in einzelne Zähne eines Zahnkranzes sind entsprechend hoch. Deshalb wird in der Regel das anfangs erwähnte Einbringen einer umlaufenden Nut bevorzugt. Die mit der Ausnehmung geschwächten Zähne werden bei Tragproblemen stärker, d. h. unter Verwendung von mehr Material, ausgebildet. Der damit verbundene erhöhte Materialverbrauch ist nachteilig.

Schiebemuffen deren Zähne mit gleicher Teilung zueinander angeordnet sind und in deren Zahnkranz nur einzelne Zähne mit Ausnehmungen versehen sind, sind gezielt auf den Synchronkörper zu montieren. Die erwähnten Zähne mit den Ausnehmungen müssen exakt über der Position der Elemente stehen. Um Falschmontagen zu vermeiden sind an Schiebemuffe und Synchronkörper miteinander korrespondierende Markierungen vorgesehen. Bekannt sind auch Lösungen, bei denen in die Zahnkränze des Synchronkörpers und der Schiebemuffen Sperren, z. B. in Form von einem sehr breiten Zahn und einer dazugehörigen Lücke eingebracht sind. Diese Sperren sichern ab, daß die Ausnehmung bei der Montage der Schiebemuffe auf dem Synchronkörper tatsächlich über dem zugeordneten Element sitzt. Mit der ersten Lösung sind Fehlmontagen trotzdem nicht sicherer ausgeschlossen. Die zweite Lösung wiederum ist aufgrund des gesonderten Bearbeitungsaufwandes für das Ausarbeiten der Sperre teuer.

Generell ist bekannt, daß mit dem Einbringen von Nuten und Ausnehmungen mittels eines spanabhebenden Verfahrens, insbesondere aufgrund der notwendigen Bearbeitungszeiten, hohe Fertigungskosten verbunden sind. Die Bearbeitungszeiten fallen beim Ausarbeiten der genannten Ausnehmung besonders ins Gewicht, da die Oberflächen der Ausnehmungen wegen eines reibende Kontaktes der Rast- oder anderen Elemente gegen diese, in der Regel zumindest feinbearbeitet sind.

Die Kontur der Ausnehmungen läßt sich in spanender Herstellung nur sehr eingeschränkt gestalten. Sie ist in der Regel nicht optimal den Kontakt- und Reibverhältnissen zwischen der Schiebemuffe und dem Rast- oder anderem Element angepaßt. So ist z. B. die Auflagebreite der Kontaktfläche zwischen dem Rastelement und der Schiebemuffe durch die Breite des Zahnes bestimmt, aus dem die Ausnehmung ausgearbeitet ist. Die Kontur der Auflage ist zumeist durch das angewendete spanende Verfahren und der damit verbundenen Form und Bewegungsrichtung des spanabhebenden Werkzeuges und nicht durch die funktionell notwendigen Anlageverhältnisse bestimmt.

### Beschreibung der Erfindung

Aufgabe der Erfindung ist es daher, eine Schiebemuffe zu schaffen, deren Fertigung, mit Bezug auf das Einbringen der Ausnehmungen, kostengünstig ist und bei denen die Ausnehmungen, insbesondere deren Kontur, weitestgehend frei gestaltbar und damit von den notwendigen Anlageverhältnissen bestimmt ist.

Diese Aufgabe wird nach dem kennzeichnenden Teil des Anspruches 1 dadurch gelöst, daß die Ausnehmung durch plastische Materialverdrängung aus dem Zahn gebildet ist und das das verdrängte Material zumindest an einer Seite des Zahnes in Umfangsrichtung gesehen über die Kontur der Flanke hinaus und in eine Zahnlücke hinein ragt. Die Ausnehmung ist also durch spanloses Umformen gebildet. Eine derartig ausgebildete Aufnahme entsteht durch z. B. Prägen, Walzen oder Rollieren an vorher spanend oder spanlos hergestellten Schiebemuffen mit ihrer Verzahnung. Die Schiebemuffen sind aus beliebigen metallischen Werkstoffen, jedoch bevorzugt aus Stahl gebildet. Die Erfindung ist auf Schiebemuffen mit allen möglichen Ausführungsformen von Zähnen, die zueinander gleichmäßig oder unterschiedliche beabstandet sein können, anwendbar. Das Material wird aus dem Zahn in Richtung des Zahnfußes sowie über die normale Flankenkontur des Zahnes hinaus in die sich dem Zahn in eine Richtung anschließende Lücke oder die sich beidseitig des Zahnes anschließenden Lücken plastisch verdrängt. Durch den Umformprozeß entfällt jede spanende Bearbeitung der Ausnehmungen. Dabei können die Ausnehmungen genauso einfach in jeden Zahn des Zahnkranzes der Schiebemuffe wie auch gezielt in nur einzelne Zähne eingebracht werden. Die erforderliche Feinheit der Oberfläche der Kontaktflächen oder Konturen zu den Rast- oder ähnlichen Elementen ist durch die im Umformverfahren gebildete Struktur abgesichert. Die Bearbeitungszeiten für das Einbringen der Ausnehmungen sind im Vergleich zum spanabhebenden Einbringen kürzer. Die Konturen der Ausnehmungen sind fast uneingeschränkt den konstruktiven Anforderungen anpaßbar und kaum vom Fertigungsverfahren bestimmt.

Besonders vorteilhaft läßt sich die Kontur der Ausnehmung an die Anlagebedingungen des Rastelementes oder der anderen der vorgenannten Elemente anpassen, wenn das verdrängte Material möglichst zu gleichen Anteilen beidseitig des Zahnes über die Kontur der Zahnflanken hinausragt. Das verdrängte Material kann mit als Kontaktfläche genutzt werden. Die Auflagefläche für das Element ist dadurch größer. Damit kann unter Umständen die Flächenpressung und der Verschleiß an den Kontalktflächen gemindert werden. Die Auflageverhältnisse werden generell verbessert und das Element erfährt bei entsprechender Ausformung des verdrängten Materials in Umfangsrichtung der Schiebemuffe gesehen eine verbesserte Seitenführung.

Die Erfindung sieht weiterhin eine Schiebemuffe mit den Merkmalen nach dem Oberbegriff des Anspruches 2 vor, die auf einem Synchronkörper angeordnet ist, bei dem anstelle wenigstens eines nach außen gerichteten Zahnes eine Längsnut oder eine sich radial nach innen erstreckende Aufnahme ausgebildet ist, in der ein Rastelement oder ein anderes der genannten Elemente aufgenommen ist. Bei dieser Schiebemuffe weisen also nur einzelne Zähne eine Ausnehmung auf. Dabei können ein Zahn oder zwei bzw. mehr nebeneinanderliegende Zähne mit einer Ausnehmung versehen sein, denen sich dann auf jeden Fall in Umfangsrichtung wieder Zähne ohne derartige Ausnehmungen anschließen. Die Erfindung sieht für diese Schiebemuffe vor, daß die Ausnehmungen ebenfalls durch plastische Materialverdrängung aus dem Zahn gebildet ist und das das verdrängte Material zumindest an einer Seite des Zahnes in Umfangsrichtung gesehen über die Kontur der Flanke hinaus und in zumindest eine angrenzende Zahnlücke hineinragt und das das in die Lücke hineinragende Material beim Aufschieben der Schiebemuffe auf den Synchronkörper eine Sperre gegen ein Einschieben eines nach außen gerichteten Zahnes der Außenverzahnung des Synchronkörpers in die Lücke bildet. Dem oder den nebeneinanderliegenden Zähnen mit der Ausnehmung ist gegenüberliegend die Aufnahme oder die Längsnut des Synchronkörpers angeordnet, in der das Rast- oder andere Element aufgenommen ist und die auf die Ausnehmung der die Ausnehmungen wirken. Damit bei der Montage der Synchronisiereinrichtung die Zähne der Schiebemuffe mit den Ausnehmungen in Umfangsrichtung exakt in ihrer vorgegebenen Position über dem Rastelement oder dem anderen Element stehen, ist soviel Material aus dem Zahn in die benachbarte Lücke oder benachbarten Lücken verdrängt, daß ein nach außen gerichteter Zahn des Synchronkörpers aufgrund seiner Abmessungen in Längsrichtung nicht in eine derartige Lücke geschoben werden kann. Die Zähne mit den Ausnehmungen passen somit zwangsweise nur in die Längsnut bzw. in den Bereich der Aufnahme an dem Synchronkörper. Die Schiebemuffe läßt sich aufgrund dieser durch das verdrängte Material gebildeten Sperre nicht verkehrt aufschieben. Ein zusätzlicher Bearbeitungsaufwand für das Einbringen einer Sperre entfällt mit dieser Lösung. Fehlmontagen sind ausgeschlossen.

Schließlich ist in einer weiteren Ausgestaltung der Erfindung vorgesehen, daß für alle mit den Ansprüchen 1 bis 2 beschriebenen Ausführungsformen von Schiebemuffen zumindest der Grundkörper der Schiebemuffe mit den nach innen gerichteten Zähnen in seinem Ausgangszustand aus einem zumindest einseitig profilierten Blechstreifen besteht. Der Blechstreifen wird, nachdem er mit dem notwendigen Profil der Verzahnung, Ausnehmung und weiterer Profilelemente versehen ist, kreisförmig gebogen und an seinen Schnittkanten zusammengeführt sowie miteinander verbunden. Die Ausnehmung ist dabei durch eine Prägung oder eine eingewalzte Kontur gebildet. Die Schaltgabelführung der Schiebemuffe und eventuell noch weitere Elemente der Schiebemuffe sind separat gefertigt und anschließend am Grundkörper befestigt oder schon einstückig mit dem Grundkörper ausgebildet. Derartige Schiebemuffen lassen sich, insbesondere in der Massenfertigung, kostengünstig herstellen. Der Formungsprozeß für das Formen der Ausnehmungen ist in dem Gesamtformungsprozeß für das Formen des Profils des Blechstreifens mit der Verzahnung integriert und erfordert deshalb keine gesonderten Bearbeitungszeiten. Abfallmaterial fällt bei der Fertigung derartiger Schiebemuffen so gut wie nicht an.

### Kurze Beschreibung der Zeichnungen

Die Erfindung wird nachfolgend anhand von zwei Ausführungsbeispielen erläutert. Es zeigen:
- Figur 1: eine geschnitten dargestellte Teilansicht eines Ausführungsbeispieles einer erfindungsgemäßen Schiebemuffe mit Sitz auf einem Synchronkörper,
- Figur 2: ein Ausführungsbeispiel eines Zahnes einer Schiebemuffe gemäß Erfindung und
- Figur 3: einen Längsschnitt durch den Zahn nach Figur 2 entlang der Linie III-III, mit angrenzenden Zahnlücken an einem gestreckt dargestellten Abschnitt eines profilierten Blechstreifens.

### Detaillierte Beschreibung der Zeichnungen

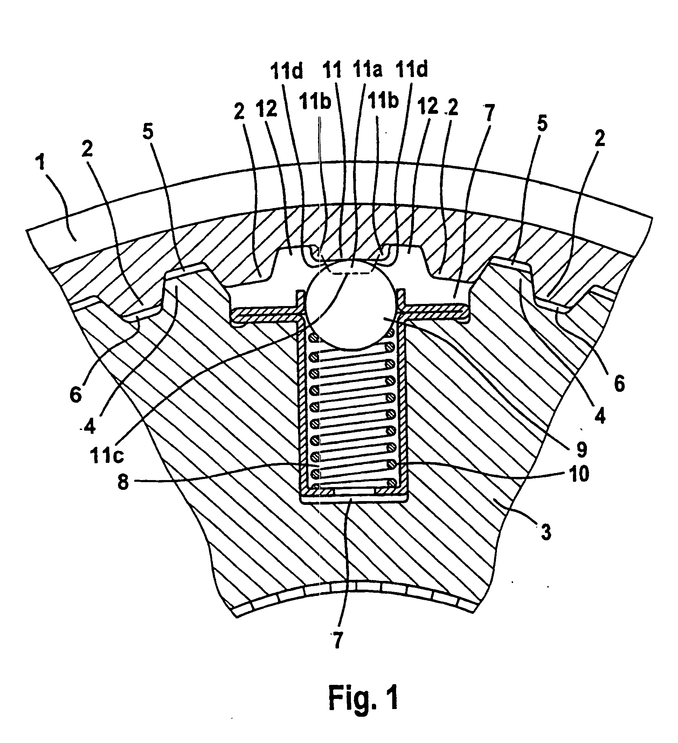

Figur 1 zeigt eine Teilansicht einer Schiebemuffe 1 die mit nach innen gerichteten Zähnen 2 in Zahnlücken 6 eines Synchronkörpers 3 eingreift. Nach außen gerichtete Zähne der Außenverzahnung 4 des Synchronkörpers 3 wiederum greifen in Zahnlücken 5 der Schiebemuffe 1. In dem Synchronkörper 3 ist eine Längsnut 7 ausgebildet. In der Längsnut 7 ist ein Rastelement 8 aufgenommen und geführt. Das Rastelement 8 wirkt mit einer durch eine Druckfeder 10 vorgespannten Kugel 9 auf eine in das freie nach innen weisende Ende 11c eines Zahnes 11 eingebrachte Ausnehmung 11a. Beidseitig des Zahnes 11 ragt über die Kontur der Flanken 11d hinaus das plastisch verdängte Material 11b in jeweils eine Lücke 12 hinein. Das verdrängte Material 11b reduziert den Querschnitt der Lücke 12 soweit, daß der Querschnitt der Lücke 12 wesentlich kleiner als der Querschnitt einer Zahnlücke 5 ist. Ein nach außen gerichteter Zahn der Außenverzahnung 4 hat aufgrund seiner dem Querschnitt der Zahnlücke 5 angepaßten Kontur keinen Platz in einer Lücke 12.

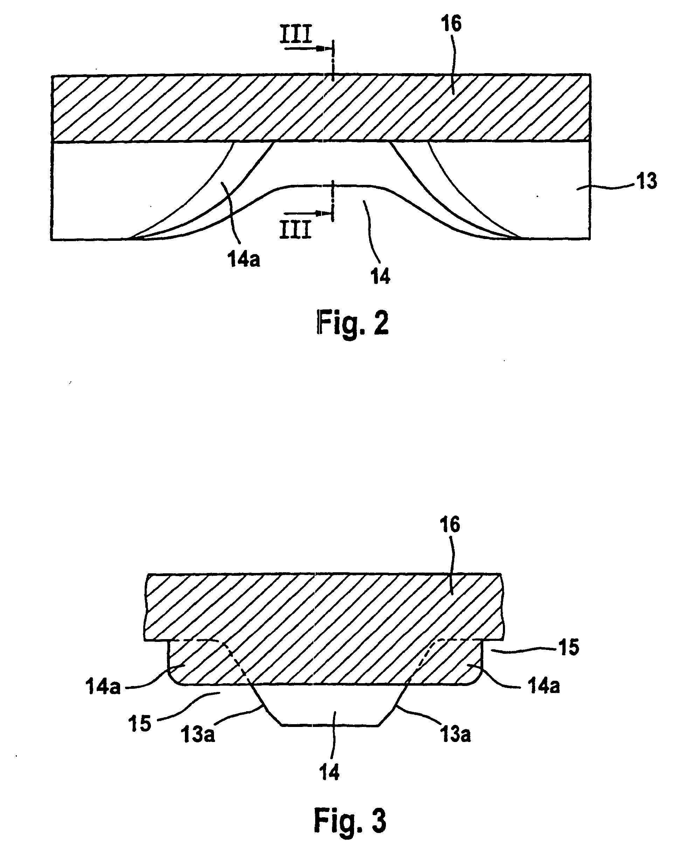

Figur 2 und 3 zeigen ein Ausführungsbeispiel eines Zahnen 13 einer nicht weiter dargestellten Schiebemuffe gemäß Erfindung, in dem Zahn 13 ist eine Ausnehmung 14 eingebracht. Das zur Bildung der Ausnehmung 14 aus dem Zahn 13 verdrängte Material 14a ragt beidseitig über die Kontur der Flanken 13a des Zahnes 13 hinaus und dabei in jeweils eine Zahnlücke 15 hinein. Wie in Figur 3 zu erkennen ist, ist der Zahn 13 mit der Ausnehmung 14 als Profil in einen profilierten Blechstreifen 16 eingebracht. Dieser anfangs flach ausgerichtete flache Blechstreifen 16 wird nach seiner Profilierung kreisförmig gebogen und an seinen Schnittkanten zusammengeführt sowie miteinander verbunden.

### Bezugszeichen

- 1: Schiebemuffe
- 2: nach innen gerichteter Zahn
- 3: Synchronkörper
- 4: Außenverzahnung
- 5: Zahnlücke
- 6: Zahnlücke
- 7: Längsnut
- 8: Rastelement
- 9: Kugel
- 10: Druckfeder
- 11: Zahn
- 11 a: Ausnehmung
- 11 b: verdrängtes Material
- 11 c: freies nach innen weisendes Ende
- 11 d: Flanke
- 12: Lücke
- 13: Zahn
- 13a: Flanke
- 14: Ausnehmung
- 14a: verdrängtes Material
- 15: Zahnlücke
- 16: Blechstreifen

## Patentansprüche

1. Schiebemuffe (1) einer Synochronisiereinheit, mit an ihrem Innenumfang ausgebildeten sowie nach innen gerichteten Zähnen (2), wobei die Flanken (11d) der nach innen gerichteten Zähne längs zu einer Mittelachse der Schiebemuffe (1) ausgerichtet verlaufen und die nach innen gerichteten Zähne (2) in eine Außenverzahnung (4) eines die Schiebemuffe (1) längsverschiebbar aufnehmenden Synchronkörpers (3) eingreifen und wobei wenigstens ein Zahn (11) der nach innen gerichteten Zähne (2) mit mindestens einer zumindest in das freie nach innen weisende Ende (11c) des Zahnes eingebrachten sowie sich in Richtung des Fußes des Zahnes erstreckenden Ausnehmung (11a) versehen ist, **dadurch gekennzeichnet, daß** die Ausnehmung (11a) durch plastische Materialverdrängung aus dem Zahn (11) gebildet ist und das das verdrängte Material (11b) zumindest an einer Seite des Zahnes (11) in Umfangsrichtung gesehen über die Kontur der Flanke (11d) hinaus und in zumindest eine angrenzende Zahnlücke (12) hineinragt.

2. Schiebemuffe einer Synchronisiereinheit mit an dem Innenumfang der Schiebemuffe ausgebildeten sowie nach innen gerichteten Zähnen (2), wobei die Schiebemuffe (1) folgende Merkmale aufweist:
- in Längsrichtung projizierte Konturen der nach innen gerichteten Zähne (2) sind jeweils untereinander gleich,
- Flanken der Zähne (2) laufen längs zu einer Mittelachse der Schiebemuffe (1) ausgerichtet,
- die nach innen gerichteten Zähne (2) greifen in eine Außenverzahnung (4) eines die Schiebemuffe (1) längsverschiebbar aufnehmenden Synchronkörpers (3) ein,
- die nach innen gerichteten Zähne (2) sind jeweils mit gleichmäßiger Teilung zueinander am Umfang angeordnet,
- zwischen den nach innen gerichteten Zähnen (2) ist mindestens ein weiterer nach innen gerichteter Zahn (11) angeordnet, wobei der weitere nach innen gerichtete Zahne (11) mit mindestens einer zumindest in das freie nach innen weisende Ende (11c) des Zahnes (11) eingebrachten sowie in Richtung des Fußes des Zahnes erstreckenden Ausnehmung (11a) versehen ist,
- am Synchronkörper (3) ist, der Ausnehmung (11a) gegenüberliegend, anstelle wenigstens eines nach außen gerichteten Zahnes der Außenverzahnung (4) eine Längsnut (7) oder eine sich radial nach innen erstreckende Aufnahme ausgebildet und
- in der Längsnut (7) oder der Aufnahme ist wenigstens ein mit der Ausnehmung (11a) zusammenwirkendes Rastelement (8) oder Sperrelement geführt,
**dadurch gekennzeichnet, daß** die Ausnehmung (11a) durch plastische Materialverdrängung aus dem Zahn (11) gebildet ist und das verdrängte Material (11b) zumindest an einer Seite des Zahnes (11) in Umfangsrichtung gesehen über die Kontur der Flanke (11d) hinaus und in eine Lücke (12) hineinragt und daß das in die Lücke (12) hineinragende Material (11b) beim Aufschieben der Schiebemuffe (1) auf den Synchronkörper (3) eine Sperre gegen ein Einschieben eines nach außen gerichteten Zahnes (4) in die Lücke (12) bildet.

3. Schiebemuffe nach Anspruch 1 oder 2, **dadurch gekennzeichnet, daß** zumindest der Grundkörper der Schiebemuffe (1) mit den nach innen gerichteten Zähnen (2, 11, 13) in seinem Ausgangszustand aus einem zumindest einseitig profilierten Blechstreifen (16) besteht, der kreisförmig gebogen ist und dessen Schnittkanten dabei zusammengeführt sowie miteinander verbunden sind und daß die Ausnehmung (11, 14) durch eine Prägung oder eine eingewalzte Kontur gebildet ist.

## Claims

1. Sliding sleeve (1) of a synchronising unit comprising inwards directed teeth (2) configured on its inner periphery, the flanks (11d) of the inwards directed teeth extending longitudinally of a central axis of the sliding sleeve (1), the inwards directed teeth (2) meshing with an outer gearing (4) of a synchroniser body (3) that receives the sliding sleeve (1) for longitudinal displacement, at least one tooth (11) among the inwards directed teeth (2) being provided with at least one recess (11a) that is made in at least the inwards pointing free end (11c) of the tooth and extends in the direction of the tooth base, **characterised in that** the recess (11a) is formed by plastic displacement of material out of the tooth (11), and the displaced material (11b), as viewed in peripheral direction, extends, at least on one side of the tooth (11), beyond the contour of the flank (11d) and into at least one adjoining tooth gap (12).

2. Sliding sleeve of a synchronising unit comprising inwards directed teeth (2) configured on the inner periphery of the sliding sleeve, which sliding sleeve (1) has the following characteristics:
- contours of the inwards directed teeth (2) as projected in longitudinal direction are identical to one another,
- flanks of the teeth (2) are oriented longitudinally of a central axis of the sliding sleeve (1),
- the inwards directed teeth (2) mesh with an outer gearing (4) of a synchroniser body (3) that receives the sliding sleeve (1) for longitudinal displacement,
- the inwards directed teeth (2) are arranged on the periphery at a uniform pitch,
- between the inwards directed teeth (2) is arranged at least one further inwards directed tooth (11) that is provided with at least one recess (11a) made in at least the inwards pointing free end (11c) of the tooth (11) and extending in the direction of the tooth base,
- a longitudinal groove (7) or a radially inwards extending reception is arranged on the synchroniser body (3) opposite the recess (11a) in place of at least one outwards directed tooth of the outer gearing (4), and
- at least one detent element (8) or locking element cooperating with the recess (11a) is guided in the longitudinal groove (7) or the reception,
**characterised in that** the recess (11a) is formed by plastic displacement of material out of the tooth (11), and the displaced material (11b), as viewed in peripheral direction, extends, at least on one side of the tooth (11), beyond the contour of the flank (11d) and into a gap (12) and, when the sliding sleeve (1) is being slipped onto the synchroniser body (3), the material (11b) extending into the gap (12) forms a barrier that prevents an outwards directed tooth (4) from being pushed into the gap (12).

3. Sliding sleeve according to claim 1 or 2, **characterised in that** at least the base body of the sliding sleeve (1) having the inwards directed teeth (2, 11, 13) is made in its original state out of a sheet metal strip (16) that is profiled at least on one side, said strip is bent into a circular shape, its cut edges are brought together and joined to each other, and the recess (11, 14) is formed by a stamping or a rolled-in contour.

## Revendications

1. Manchon coulissant (1) d'un ensemble de synchronisation comprenant des dents (2) configurées sur sa périphérie interne et dirigées vers l'intérieur, les flancs (11d) des dents dirigées vers l'intérieur s'étendant le long d'un axe central du manchon coulissant (1), les dents (2) dirigées vers l'intérieur s'engageant dans une denture extérieure (4) d'un corps de synchronisation (3) qui reçoit le manchon coulissant (1) en déplacement longitudinal, au moins une (11) des dents (2) dirigées vers l'intérieur étant munie au moins d'un évidement (11a) qui est disposé au moins dans une extrémité libre (11c) de la dent orientée vers l'intérieur, ledit évidement (11a) s'étendant dans la direction du pied de la dent, **caractérisé en ce que** l'évidement (11a) est formé par un déplacement plastique de matériau à partir de la dent (11) et que le matériau déplacé (11b), en regardant dans la direction périphérique, s'étend, au moins d'un côté de la dent (11), au-delà du contour du flanc (11d) et dans au moins un entredent (12) adjacent.

2. Manchon coulissant d'un ensemble de synchronisation comprenant des dents (2) dirigées vers l'intérieur et configurées sur la périphérie interne du manchon coulissant (1) qui possède les caractéristiques suivantes :
- des contours des dents (2) dirigées vers l'intérieur projetés dans la direction longitudinale sont identiques, l'un à l'autre,
- des flancs des dents (2) s'étendent le long d'un axe central du manchon coulissant (1),
- les dents (2) dirigées vers l'intérieur s'engagent dans une denture extérieure (4) d'un corps de synchronisation (3) qui reçoit le manchon coulissant (1) en déplacement longitudinal,
- les dents (2) dirigées vers l'intérieur sont agencées à pas uniforme sur la périphérie,
- entre les dents (2) dirigées vers l'intérieur est agencée au moins une autre dent (11) dirigée vers l'intérieur qui est munie d'au moins un évidement (11a) qui est disposé au moins dans une extrémité libre (11c) de la dent (11) orientée vers l'intérieur, ledit évidement (11a) s'étendant dans la direction du pied de la dent,
- à la place d'au moins une dent dirigée vers l'extérieur de la denture extérieure (4) est configurée sur le corps de synchronisation (3), vis-à-vis de l'évidement (11a), une rainure longitudinale (7) ou une réception qui s'étend radialement vers l'intérieur, et
- dans la rainure longitudinale (7) ou la réception est guidé au moins un élément d'arrêt (8) ou de blocage qui coopère avec l'évidement (11a),
**caractérisé en ce que** l'évidement (11a) est formé par un déplacement plastique de matériau à partir de la dent (11), et, en regardant dans la direction périphérique, le matériau déplacé (11b) s'étend, au moins d'un côté de la dent (11), au-delà du contour du flanc (11d) et dans un entredent (12), et, lorsque le manchon coulissant (1) est poussé sur le corps de synchronisation (3), le matériau (11b) qui pénètre dans l'entredent (12) forme un blocage qui empêche une dent (4) orientée vers l'extérieur d'entrer dans l'entredent (12).

3. Manchon coulissant selon la revendication 1 ou 2, **caractérisé en ce que**, au moins le corps de base du manchon coulissant (1) comportant les dents (2, 11, 13) orientées vers l'intérieur est fait, à son état de départ d'un feuillard en tôle (16) qui est profilé au moins d'un côté et cintré en forme circulaire et dont les bords découpés sont réunis et reliés, l'un à l'autre, et que l'évidement (11,14) est formé par estampage ou par un contour laminé.
